# EUROPÄISCHE PATENTANMELDUNG

(11) **EP 0 716 101 A2**
(43) Veröffentlichungstag der Anmeldung: **12.06.1996**
(21) Anmeldenummer: 95118929.9
(22) Anmeldetag: 01.12.1995
(51) Int. Cl.: C08F 212/10, C08L 25/12

(54) **Partikelförmige, vernezte Copolymerisate, ihre Verwendung als Mattierungsmittel und Formmassen mit ihren**

(30) Priorität: 09.12.1994 DE 4443966
(71) Anmelder: BASF AKTIENGESELLSCHAFT, D-67056 Ludwigshafen (DE)
(72) Erfinder: Güntherberg, Norbert, Dr., D-67346 Speyer (DE); Jahns, Ekkehard, Dr., D-69469 Weinheim (DE); Fischer, Wolfgang, Dr., D-67067 Ludwigshafen (DE); McKee, Graham Edmund, Dr., D-67433 Neustadt (DE); Rosenau, Bernhard, Dr., D-67434 Neustadt (DE)

(57) **Zusammenfassung**

Thermoplastische Formmassen aus
A) 35 bis 99,5 Gew.-% eines Matrix-Copolymerisates (A) aus
   a₁) 50 bis 95 Gew.-% Styrol und/oder α-Methylstyrol,
   a₂) 5 bis 50 Gew.-% Acrylnitril, und
   a₃) 0 bis 20 Gew.-% weiteren Comonomeren
B) 0 bis 50 Gew.-% eines in (A) unlöslichen partikelförmigen Pfropfcopolymerisates (B) mit einem mittleren Teilchendurchmesser d₅₀ von 0,03 bis 1 µm aus
   b₁) 30 bis 80 Gew.-% eines Kerns aus einem kautschukelastischen Polymeren mit einer Glasübergangstemperatur unter -10°C, und
   b₂) 20 bis 70 Gew.-% einer Pfropfhülle aus einem Polymeren, das mit (A) verträglich oder teilverträglich ist,
   und
C) 0,5 bis 30 Gew.-% eines in (A) unlöslichen partikelförmigen vernetzten Copolymerisates (C) mit einem mittleren Teilchendurchmesser d₅₀ von 0,5 bis 50 µm aus
   c₁) 50 bis 89,95 Gew.-% Styrol und/oder α-Methylstyrol,
   c₂) 10 bis 50 Gew.-% Acrylnitril,
   c₃) 0,05 bis 5 Gew.-% eines polyfunktionellen, vernetzenden Monomeren,
   c₄) 0 bis 10 Gew.-% eines Monomeren, das saure oder basische Gruppen enthält, und
   c₅) 0 bis 20 Gew.-% weiteren Comonomeren.

## Beschreibung

Die vorliegende Erfindung betrifft thermoplastische Formmassen aus
A) 35 bis 99,5 Gew.-% eines Matrix-Copolymerisates (A) aus
   a₁) 50 bis 95 Gew.-% Styrol und/oder α-Methylstyrol,
   a₂) 5 bis 50 Gew.-% Acrylnitril, und
   a₃) 0 bis 20 Gew.-% weiteren Comonomeren
B) 0 bis 50 Gew.-% eines in (A) unlöslichen partikelförmigen Pfropfcopolymerisates (B) mit einem mittleren Teilchendurchmesser von 0,03 bis 1 µm, aus
   b₁) 30 bis 80 Gew.-% eines Kerns aus einem kautschukelastischen Polymeren mit einer Glasübergangstemperatur unter -10°C, und
   b₂) 20 bis 70 Gew.-% einer Pfropfhülle aus einem Polymeren, das mit (A) verträglich oder teilverträglich ist.
und
C) 0,5 bis 30 Gew.-% eines in (A) unlöslichen partikelförmigen vernetzten Copolymerisates (C) mit einem mittleren Teilchendurchmesser von 0,05 bis 50 µm aus
   c₁) 50 bis 89,95 Gew.-% Styrol und/oder α-Methylstyrol,
   c₂) 10 bis 50 Gew.-% Acrylnitril,
   c₃) 0,5 bis 5 Gew.-% eines polyfunktionellen, vernetzenden Monomeren,
   c₄) 0 bis 10 Gew.-% eines Monomeren, das saure oder basische Gruppen enthält, und
   c₅) 0 bis 20 Gew.-% weiteren Comonomeren.

Außerdem betrifft die Erfindung die partikelförmigen Copolymerisate (C), ein Verfahren zur Herstellung dieser Copolymerisate sowie die Verwendung der Partikel als Mattierungsmittel für thermoplastische Kunststoffe, und Formkörper aus diesen mattierten Kunststoffen.

Es ist allgemein bekannt, die Schlagzähigkeit von nichtelastischen Polymeren durch Zusatz von kautschukelastischen Polymeren zu verbessern. In derartigen Mischungen bildet das nichtelastische Basismaterial, das auch als Matrix bezeichnet wird, ein Kontinuum, in welchem die kautschukelastischen Teilchen in Form diskreter Partikel eingebettet sind. Bekannte Beispiele für derartige Mischungen sind die sog. ABS- bzw. ASA-Formmassen, in denen die Matrix aus einem Styrol/Acrylnitril-Copolymerisat besteht und in denen vernetztes Polybutadien bzw. Polyalkylacrylat zur Schlagzähmodifizierung in die Matrix eingelagert ist.

Um eine gute Einbindung der Kautschukpartikel in die Matrix und damit gute mechanische Eigenschaften des Kunststoffes zu gewährleisten, werden diese, wie ebenfalls allgemein bekannt ist, mit einer Pfropfhülle umgeben, deren Aufbau dem des Basispolymeren entspricht oder die mit letzterem verträglich ist. Im ABS- bzw. ASA-Kunststoff sind die Polybutadienpartikel bzw. Polyalkylacrylatpartikel mit einer Schale aus Styrol/Acrylnitril-Copolymer gepfropft.

In bestimmten Anwendungsbereichen thermoplastischer, schlagzäh modifizierter Polymermaterialien, insbesondere bei der Automobil-Innenausstattung, bei Haushalts-, Elektro- und Sportgeräten, wird in zunehmendem Maße eine blendfreie, matte Oberfläche gewünscht, wofür dekorative Gründe oder auch Sicherheitsaspekte, z.B. verminderte Blendung des Autofahrers und verbesserte Gebrauchseigenschaften - Fingerabdrücke sind auf matten Flächen kaum sichtbar - zu nennen sind. Die meisten handelsüblichen schlagzäh modifizierten Formmassen liefern jedoch Formkörper mit glänzender Oberfläche.

Matte Formteile lassen sich durch Behandlung der Oberfläche des fertigen, normalen Glanz aufweisenden Formteils erzielen, beispielsweise durch mechanisches Aufrauhen wie Schleifen und Bürsten, durch Ätzen, Anlösen und Quellen oder durch Aufbringen einer matten Überzugsschicht. Allen Verfahren gemeinsam ist jedoch der Nachteil eines zusätzlichen Arbeitsschrittes am fertigen Formteil.

Ferner kann man zur Herstellung von Formteilen mit matter Oberfläche auch Preß- und Formwerkzeuge mit strukturierter Oberfläche verwenden, jedoch wird die Struktur des Werkzeugs verhältnismäßig schnell abgenutzt.

Der Zusatz anorganischer Mattierungsmittel wie Kieselgel oder Kreide zu Polymeren hat den Nachteil, daß die mechanischen Eigenschaften der Formkörper beeinträchtigt werden.

Dieser negative Effekt läßt sich durch den Zusatz geeigneter organischer Mattierungsmittel vermeiden. Sie bestehen aus Partikeln vergleichsweise großen Durchmessers (D > etwa 0,5 µm) die im Matrixpolymeren dispergiert sind. Die Partikel treten etwas aus der glatten und damit glänzenden Oberfläche des Matrixpolymers heraus und bewirken auf diese Weise eine diffuse Reflexion des auftreffenden Lichtes (Streuung), wodurch die Oberfläche dem Betrachter matt erscheint.

Für viele Anwendungen sind matte und gleichzeitig schlagzähe Polymere gefordert. Soll ein hartes, sprödes Polymeres in einem Arbeitsgang derart modifiziert werden, müssen die großen, mattierenden Partikel zugleich kautschukelastische Eigenschaften haben. Um die mattierenden Kautschukpartikel mit dem nichtelastischen Matrixpolymeren verträglich oder zumindest teilverträglich zu machen, sind erstere zumeist mit einer Pfropfhülle aus einem solchen verträglichen bzw. teilverträglichen Polymeren versehen.

Derartige kautschukelastische und zugleich mattierende Pfropfpolymerisate großen Teilchendurchmessers sind aus der EP-A 269 324 bekannt. Jedoch ist das Verfahren zur Herstellung der Teilchen sehr umständlich. Hiernach werden in einem ersten Schritt kautschukelastische Kern-Partikel hergestellt, die im folgenden Schritt mit frisch zugegebenem Monomeren gequollen werden, wonach man die Polymerisation fortsetzt. Dieser Vorgang wird gegebenenfalls bis zum Erreichen der gewünschten Teilchengröße wiederholt, wonach dann die Pfropfhülle erzeugt wird.

Gemäß der EP-A 576 960 besteht ein anderer Weg zur Erzielung matter, schlagzäher Formmassen darin, größere Teilchen durch Agglomeration von kleinen Teilchen solcher Pfropfpolymere zu erzeugen, die im Pfropfkern saure und in der Hülle basische Gruppen enthalten oder umgekehrt. Dem hierdurch zu erzielenden Mattierungseffekt sind in manchen Fällen jedoch Grenzen gesetzt.

Der Erfindung lagen daher Mischungen von schlagzäh modifizierten Formmassen und Mattierungsmitteln als Aufgabe zugrunde, welche die Nachteile der bisher bekannten Systeme nicht aufweisen.

Demgemäß wurden die eingangs definierten thermoplastischen Formmassen gefunden.

Weiterhin wurden thermoplastische Formmassen gefunden, in denen die Monomere, welche den Kern und/oder die Hülle der Pfropfpolymerisate (B) aufbauen, saure oder basische Gruppen enthalten. Weiterhin wurden Formmassen gefunden, die sowohl mit sauren bzw. basischen Gruppen modifizierte Pfropfpolymerisate (B) als auch unmodifizierte Pfropfpolymerisate (B) enthalten sowie Formmassen, deren Copolymerisat (C) saure oder basische Monomere enthält. Außerdem wurden die partikelförmigen Copolymerisate (C), ein Verfahren zu ihrer Herstellung, die Verwendung der Komponente (C) als Mattierungsmittel für thermoplastische Kunststoffe, die Verwendung der erfindungsgemäßen thermoplastischen Formmassen zur Herstellung von Formkörpern und Formkörper aus solchen Formmassen gefunden.

Als Komponente (A) enthalten die erfindungsgemäßen Formmassen, bezogen auf die Summe der Komponenten (A), (B) und (C) 35 bis 99,5, insbesondere 40 bis 90 und besonders bevorzugt 50 bis 80 Gew.-% eines Copolymerisates aus den Monomeren (a₁) bis (a₃). Es stellt das Matrixkontinuum dar, in welches die partikelförmigen Komponenten (B) und (C) eingebettet sind. Die Komponente (A) besteht aus einer Mischung aus
a₁) 50 bis 95 Gew.-% Styrol und/oder α-Methylstyrol
a₂) 5 bis 50 Gew.-% Acrylnitril, und
a₃) 0 bis 20 Gew.-% weiteren Comonomeren.

Die Komponente (A) der erfindungsgemäßen Formmassen ist vorzugsweise zu 50 bis 95, bevorzugt zu 55 bis 90 und besonders bevorzugt zu 60 bis 85 Gew.-% aus Styrol oder aus α-Methylstyrol (a₁) und der Restmenge aus Acrylnitril (a₂) aufgebaut. Besonders geeignet sind Mischungen aus zwei Copolymeren (A') und (A''), in denen (A') aus einem Styrol-Acrylnitril-Copolymeren und (A'') aus einem α-Methylstyrol-Acrylnitril-Copolymeren besteht. Daneben eignen sich auch Polymerisate, in denen das Styrol nur zum Teil durch α-Methylstyrol ersetzt ist. Im Falle der Mitverwendung von α-Methylstyrol beträgt dessen Anteil vorzugsweise 5 bis 50 Gew.-% des Monomeren (a₁).

Ferner kann die Komponente (A) auf Kosten der Monomeren (a₁) und/oder (a₂) aus den weiteren Monomeren (a₃) aufgebaut sein. Durch die Monomeren (a₃) werden die mechanischen und thermischen Eigenschaften von Copolymeren aus (a₁) und (a₂) nach an sich bekannten Gesetzmäßigkeiten nicht wesentlich, aber in einer gewissen Bandbreite abgewandelt und/oder es kann durch sie beispielsweise die Bedruckbarkeit der Formkörper verbessert oder die Neigung zur elektrostatischen Aufladung vermindert werden.

Solche Monomeren (a₃) sind z.B. die C₁- bis C₆-Alkylester der Acrylsäure und der Methacrylsäure, Acrylamid, Methacrylamid, Methacrylnitril, Methacrylsäureanhydrid und N-alkyl. bzw. N-arylierte Maleinimide wie N-Methylmaleinimid, N-Phenylmaleinimid und N-Cyclohexylmaleinimid.

Die Polymeren (A), die wegen ihrer Hauptkomponenten Styrol und Acrylnitril allgemein auch als SAN-Polymere bezeichnet werden, sind bekannt und z.T. auch handelsüblich. Sie haben in der Regel eine Viskositätszahl VZ (ermittelt nach DIN 53 726 bei 25°C, 0,5 Gew.-% in Dimethylformamid) von 40 bis 160 ml/g. Man erhält sie in bekannter Weise durch Substanz-, Lösungs-, Suspensions-, Fällungs- oder Emulsionspolymerisation. Einzelheiten dieser Verfahren sind z.B. im Kunststoffhandbuch, Hrg. R. Vieweg und G. Daumiller, Bd. V "Polystyrol", Carl-Hanser-Verlag München 1969, S. 118 ff beschrieben.

Die Komponente (B) ist ein in der Komponente (A) unlösliches, partikelförmiges Pfropfpolymerisat. Demnach stellt Komponente A) die kohärente Phase dar, in der die Komponente (B) in Form kleiner Teilchen dispergiert ist. Der Anteil von (B) an der thermoplastischen Formmasse, bezogen auf die Summe der Komponenten (A), (B) und (C), beträgt 0 bis 50, vorzugsweise 10 bis 45 und insbesondere 15 bis 45 Gew.-%. Das Pfropfcopolymerisat (B) besteht aus
b₁) einem Kern aus einem kautschukelastischen Polymeren mit einer Glasübergangstemperatur unter -10°C und
b₂) einer Pfropfhülle aus einem Polymeren, das mit (A) verträglich oder teilverträglich ist.

Der Anteil des Pfropfkerns (b₁) an der Komponente (B), bezogen auf die Menge von (B), beträgt 30 bis 80, bevorzugt 40 bis 75 und besonders bevorzugt 50 bis 70 Gew.-%.

Der kautschukelastische Pfropfkern (b₁) besteht vorzugsweise entweder aus einem teilweise vernetzten Polymerisat eines 1,3-Diens oder eines Acrylsäurealkylesters (Polyalkylacrylat) mit einer Glasübergangstemperatur T_{g} unter -10°C, bevorzugt unter -20°C. Als 1,3-Diene kommen in der Regel Butadien und substituierte Diene wie Isopren in Betracht.

Die zur Herstellung der Polyalkylacrylatkautschuke verwendeten Acrylsäureester enthalten in der Regel 1 bis 8 Kohlenstoffatome im Alkylrest. Besonders gut geeignet sind beispielsweise n-Butylacrylat und 2-Ethylhexylacrylat. Die Acrylsäureester können jeweils allein oder auch in Mischung eingesetzt werden.

Die Polymerisation der Diene kann man in bekannter Weise so führen, daß man hierbei vernetzte, kautschukelastische Polymerisate erhält. Im Falle der kautschukelastischen Polyalkylacrylate ist hingegen die Mitverwendung von polyfunktionellen Comonomeren erforderlich, welche die Vernetzung bewirken. Geeignete Monomeren dieser Art sind beispielsweise die Divinyl- und Diallylester von Dicarbonsäuren wie der Bernsteinsäure und Adipinsäure, Diallyl- und Divinylether bifunktioneller Alkohole wie des Ethylenglycols und des Butan-1,4-diols, Diester der Acrylsäure und Methacrylsäure mit den genannten bifunktionellen Alkoholen, 1,4-Divinylbenzol und Triallylcyanurat. Besonders bevorzugt ist der Acrylsäureester des Tricyclodecenylalkohols 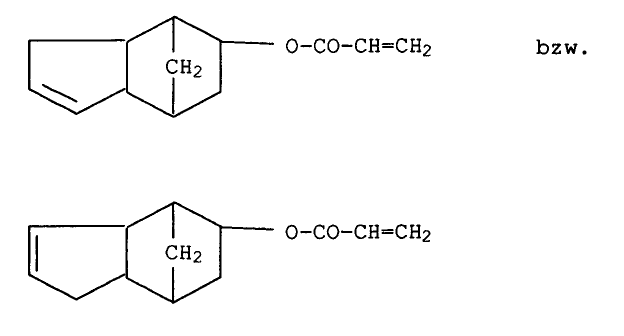
der auch als Dihydrodicyclopentadienylacrylat bezeichnet wird.

Das Vernetzungsmonomere wird üblicherweise in Mengen von 0,1 bis 10, bevorzugt 0,2 bis 5 Gew.-%, bezogen auf die Gesamtmenge der Komponente (b₁), eingesetzt.

Die Herstellung der Polybutadien- bzw. Polyalkylacrylatkautschuk-Teilchen (b₁) ist allgemein bekannt. In der Regel werden die Monomeren in wäßriger Emulsion bei 20 bis 100°C, vorzugsweise bei 50 bis 80°C polymerisiert, wobei alle Komponenten des Ansatzes zusammengegeben werden können (Batch-Verfahren), oder das Monomer alleine bzw. eine Emulsion aus Monomerem, Wasser und Emulgator allmählich zu den anderen Komponenten zugegeben werden können (Monomerzulauf- bzw. Emulsionszulauf-Verfahren). Auch eine kontinuierliche Fahrweise der Reaktion ist möglich. Bevorzugt ist eines der Zulauf-Verfahren. Es können die üblichen Emulgatoren wie Alkalimetallsalze von Alkyl- oder Alkylarylsulfonsäuren, Alkylsulfate, Fettalkoholsulfate, Salze höherer Fettsäuren mit 10 bis 30 C-Atomen oder Harzseifen verwendet werden. Ihre Menge beträgt vorzugsweise 0,5 bis 5 Gew.-%, bezogen auf die Gesamtmenge der Kernmonomeren (b₁).

Als Polymerisationsinitiatoren eignen sich Radikalbildner, insbesondere wasserlösliche Peroxide wie Peroxosulfate, z.B. Kaliumperoxodisulfat oder Ammoniumperoxodisulfat. Es können jedoch auch Redox-Systeme, insbesondere solche auf Basis von Hydroperoxiden wie Cumolhydroperoxid, eingesetzt werden. Die Menge der Initiatoren ist in der Regel 0,1 bis 2 Gew.-%.

Weiterhin verwendet man zweckmäßigerweise Molekulargewichtsregler wie Ethylhexylthioglycolat und tert.-Dodecylmercaptan, oder auch Terpinole oder dimeres α-Methylstyrol in den hierfür üblichen Mengen. Außerdem werden in den meisten Fällen Puffersubstanzen wie Natriumhydrogencarbonat, Natriumpyrophosphat oder Natriumsalze der ortho-Phosphorsäure verwendet, um einen im wesentlichen konstant bleibenden pH-Wert von vorzugsweise 6 - 9 einzustellen.

Vorzugsweise verwendet man zur Herstellung der Dispersion soviel Wasser, daß die fertige Dispersion einen Feststoffgehalt von 20 bis 50 Gew.-% hat.

Ausführliche Beschreibungen zur Herstellung der Kautschuklatices sind beispielsweise der DE-A 24 27 960 und der EP-A 62 901 zu entnehmen.

Die genauen Polymerisationsbedingungen, insbesondere Art, Dosierung und Menge des Emulgators, werden innerhalb der oben angegebenen Bereiche im einzelnen so gewählt, daß der erhaltene Latex des Polymerisates (b₁) eines d₅₀-Wert im Bereich von etwa 0,03 bis 1 µm, vorzugsweise im Bereich von 0,05 bis 0,8 µm, hat. Sind die Polymerteilchen kleiner, kann man sie auch zu größeren Teilchen agglomerieren, beispielsweise mit Hilfe hydrophiler Polymerisate, wie es in der DE-A 24 27 960 näher beschrieben ist.

Die Pfropfhülle (b₂) ist in Mengen von 20 bis 70, vorzugsweise 25 bis 60 und besonders bevorzugt 30 bis 50 Gew.-%, bezogen auf die Menge der Komponente (B), im Bestandteil (B) enthalten. Die Hülle wirkt als Verträglichkeitsvermittler zwischen dem Matrix-Copolymerisat (A) und den darin eingebetteten Kautschuk-Kernen (b₁).

Zum Aufbau der Schale (b₂) sind alle Monomeren oder Monomerengemische geeignet, aus denen Polymere entstehen, die mit der Copolymer-Matrix (A) verträglich oder teilverträglich sind und die auf die kautschukelastischen Kerne pfropfbar sind. Wenn beispielsweise die Matrix (A) ganz oder überwiegend aus einem Styrol-Acrylnitril-Copolymeren (SAN) bzw. α-Methylstyrol/Acrylnitril-Copolymer besteht, sind Styrol und/oder α-Methylstyrol und Acrylnitril auch die bevorzugten Monomere für die Polymerisation der Hülle (b₂). Es können jedoch ebenso andere Monomere verwendet werden, beispielsweise Methylmethacrylat und Methacrylnitril.

Unter Verträglichkeit wird die Mischbarkeit auf molekularer Ebene verstanden. Ein Polymeres gilt mit einem anderen als verträglich, wenn im festen Zustand die Moleküle beider Polymeren statistisch verteilt sind, wenn also die Konzentration eines Polymeren entlang eines beliebigen Vektors weder zu- noch abnimmt. Umgekehrt gilt als unverträglich, wenn sich im festen Zustand zwei Phasen ausbilden, die durch eine scharfe Phasengrenze voneinander getrennt sind. Entlang eines die Phasengrenzfläche schneidenden Vektors nimmt die Konzentration des einen Polymeren schlagartig von null auf 100 % zu und die des anderen von 100 % auf null ab.

Zwischen beiden Extremen gibt es fließende Übergänge. Sie sind dadurch gekennzeichnet, daß sich zwar eine Phasengrenze ausbildet, diese jedoch unscharf ist. An der Grenzfläche findet eine gegenseitige partielle Durchdringung der beiden Phasen statt. Die Konzentration des einen Polymeren nimmt demnach entlang eines die Phasengrenze schneidenden Vektors mehr oder weniger schnell von null auf 100 % zu und die des anderen Polymeren mehr oder weniger schnell von 100 % auf null ab.

In diesem letzten Fall spricht man auch von Teilverträglichkeit, wie sie in technisch wichtigen Polymeren häufig auftritt.

Die Pfropfung der Schalen aus den Monomeren (b₂) auf die kautschukelastischen Kerne (b₁) erfolgt in an sich bekannter Weise in der Regel durch Fortsetzung der Dispersionspolymerisation. Werden zwei oder mehr Monomere verwendet, so können sie dem Latex entweder gleichzeitig oder nacheinander zugegeben werden, wobei man im letztgenannten Fall Pfropfhüllen mit mehrschaligem Aufbau erhalten kann.

Die Pfropfung wird zweckmäßigerweise bei 20 bis 100°C, bevorzugt 50 bis 80°C vorgenommen. Als Polymerisationsinitiator können die gleichen wasserlöslichen Verbindungen eingesetzt werden, die bei der Kern-Polymerisation zum Einsatz kommen. Ebenso können Initiatoren verwendet werden, die öllöslich bzw. im Monomeren löslich sind, beispielsweise Dialkylperoxide wie Dilaurylperoxid und Dibenzoylperoxid, Perester wie tert.-Butylperpivalat und tert.-Butylperoxyneodecanoat, weiterhin Di-Peroxyketale, Peroxycarbonate und Azoverbindungen wie Azodiisobutyronitril (AIBN) und Azodiisovaleronitril (ADVN).

Einzelheiten zur Durchführung der Pfropfreaktion findet man beispielsweise in der DE-A 24 27 960 und der EP-A 62 901.

Für die erfindungsgemäßen Formmassen besonders gut geeignete Pfropfpolymerisate (B) sind solche, deren Kern saure oder basische Gruppen und deren Hülle komplementär basische oder saure Gruppen enthält. Diese funktionellen Gruppen werden über entsprechende Comonomere eingeführt, deren Anteil an Kern bzw. Hülle 0,5 bis 10 Gew.-%, vorzugsweise 1 bis 5 Gew.-% beträgt.

In den thermoplastischen Formmassen können solche, mit Säure- bzw. Basegruppen modifizierten Pfropfpolymerisate und gewöhnliche, nicht säure- bzw. basemodifizierte Pfropfpolymerisate zugleich enthalten sein. Der Anteil der säure- bzw. basehaltigen Pfropfpartikel an der Komponente (B) beträgt 2 bis 30, bevorzugt 3 bis 25 und besonders bevorzugt 5 bis 20 Gew.-%, bezogen auf die Gesamtmenge (B); der restliche Anteil ist unmodifiziertes Pfropfpolymerisat. Bezogen auf die Summe der Komponenten A), B) und C) beträgt der Anteil der sauren bzw. basischen Pfropfpolymerisate bevorzugt 2 bis 25 und besonders bevorzugt 2 bis 10 Gew.-%.

Comonomere mit sauren Gruppen wie vor allem der Carboxylgruppe und daneben auch der Sulfonsäure- und Phosphonsäuregruppe sind in erster Lienie Acrylsäure und Methacrylsäure, ferner Citraconsäure, Crotonsäure, Fumarsäure, Itaconsäure, Maleinsäure (und Maleinsäureanhydrid), Vinylsulfonsäure, Vinylbenzolsulfonsäure, Vinylphosphonsäure und Zimtsäure.

Geeignete basische Monomere sind vor allem solche, die im Molekül eine tertiäre Aminogruppe oder einen stickstoffhaltigen Heterocyclus enthalten. Bevorzugt werden Dimethylaminoethylacrylat und -methacrylat, außerdem kommen beispielsweise Morpholinmethacrylat, N-Vinylimidazol, p-Dimethylaminostyrol, N-Vinylcarbazol, N-Vinylindol, N-Vinylpyrrol, 4-Vinylpyrimidin, 2-Vinylpyridin, 3-Vinylpyridin, 4-Vinylpyridin, Hydroxyethylacrylat und Hydroxyethylmethacrylat sowie deren Gemische in Betracht.

Man nimmt an, daß die saure bzw. basische Funktionalisierung der Pfropfpolymerisat-Partikel eine Agglomeration dieser Teilchen zu größeren Partikeln bewirkt. Die größeren Partikel vermögen im Gegensatz zu den nicht agglomerierten kleineren Partikeln das Licht zu streuen und erzeugen so eine dem Betrachter matt erscheinende Formteiloberfläche (siehe EP-A 576960).

Der durch die saure bzw. basische Modifizierung der kautschukelastischen Pfropfteilchen erzielte Mattierungseffekt kann zusätzlich zu der Mattierung, wie sie durch harte Teilchen großen Durchmessers erzielt wird, erwünscht sein. Die Verwendung von sauer bzw. basisch funktionalisierten Pfropfpartikeln zusammen mit solchen großen mattierenden Teilchen führt zu besonders reflexionsfreien, seidenmatten Formteiloberflächen, da die Pfropfteilchen den Oberflächengrund zwischen den durch die großteiligen harten Teilchen erzeugten Erhebungen mattieren.

Die Komponente (C) ist ein in der Komponente (A) unlösliches, partikelförmiges vernetztes Copolymerisat großen Teilchendurchmessers. Das Copolymerisat (C) ist in der erfindungsgemäßen thermoplastischen Formmasse mit einem Anteil von 0,5 bis 30, bevorzugt 1 bis 20 und besonders bevorzugt 2 bis 10 Gew.-% enthalten. Es besteht aus
c₁) 50 bis 89,45 bevorzugt 45 bis 80 und besonders bevorzugt 50 bis 78 Gew.-% Styrol und/oder α-Methylstyrol,
c₂) 10 bis 50, bevorzugt 15 bis 45 und besonders bevorzugt 18 bis 40 Gew.-% Acrylnitril,
c₃) 0,05 bis 5, bevorzugt 0,1 bis 4 und besonders bevorzugt 0,5 bis 3 Gew.-% eines polyfunktionellen, vernetzenden Monomeren,
c₄) 0 bis 10, bevorzugt 0 bis 8 und besonders bevorzugt 0 bis 5 Gew.-% eines Monomeren, das saure oder basische Gruppen enthält, und
c₅) 0 bis 20, bevorzugt 0 bis 15 und besonders bevorzugt 0 bis 10 Gew.-% weiteren Comonomeren.

Als vernetzende Monomere (c₃) eignen sich beispielsweise diejenigen Verbindungen, wie sie als Vernetzer für die katuschukelastischen Pfropfkerne (b₁) genannt wurden. Sie bewirken, daß die Partikel des Copolymerisates (C) insbesondere unlöslich sind in der matrixbildenden Komponente (A).

Die Komponente (C) kann weiterhin Comonomere (c₄) enthalten, welche saure oder basische Gruppen tragen. Geeignete Monomere dieser Art sind solche, wie sie im Zusammenhang mit den bevorzugten Pfropfpolymerisaten (B) genannt wurden.

Sauer oder basich modifizierte Polymerisate (C) können vor allem dann von Vorteil sein, wenn auch die Pfropfpolymerisate (B) in Kern und Hülle komplementär saure und basische Gruppen enthalten, wie bereits dargelegt wurde.

Die Monomeren (c₁) und (c₂) können gänzlich oder zum Teil - vorzugsweise zu 75 bis 98 Gew.-% - durch Methylmethacrylat ersetzt sein. Auch in diesem Falle können saure bzw. basische Monomere (c₄) in den Partikeln (C) enthalten sein.

Hinsichtlich der fakultativen Comonomeren (c₅) gelten die gleichen Ausführungen wie für die fakultativen Comonomeren (a₃) zum Aufbau der Komponente (A). Sind die Monomeren (c₁) und (c₂) vollständig oder teilweise durch Methylmethacrylat ersetzt, so besteht die Komponente (c₅) aus C₁- bis C₁₀-Alkylacrylaten, bevorzugt Methylacrylat oder Ethylacrylat.

Die erfindungsgemäßen vernetzten teilchenförmigen Copolymere (C) haben eine mittlere Teilchengröße d₅₀ von 0,5 bis 50, insbesondere 0,8 bis 40 und besonders bevorzugt 1 bis 30 µm. Sie sind demnach erheblich größer als die Pfropfpolymerisat-Partikel (B).

Man erhält die Partikel (C) nach dem Verfahren der Mikrosuspensionspolymerisation, bei der man das Monomerengemisch in Gegenwart eines Schutzkolloides unter intensivem Rühren, also mit hoher Scherkraft, in Wasser dispergiert. Hierzu verwendet man üblicherweise Rührorgane, die bei Umfangsgeschwindigkeiten von 10 bis 25 m/s betrieben werden, oder andere Dispersionsorgane. Haben die Tröpfchen die gewünschte Größe erreicht, nimmt man die Polymerisation unter mäßigem Rühren bei Umfangsgeschwindigkeiten von weniger als 3 m/s durch Zugabe eines radikalischen Initiators sowie in der Regel bei Temperaturen von 40 bis 130°C vor.

Als Schutzkolloide eignen sich beispielsweise Cellulosederivate wie Carboxy- und Hydroxymethylcellulose, Poly-N-vinylpyrrolidon, Polyvinylalkohol und Polyethylenoxid, anionische Polymere wie Polyacrylsäure und kationische wie Poly-N-vinylimidazol in Konzentrationen von vorzugsweise 0,02 bis 1 Gew.-% der Gesamtmasse der Gesamtmasse der Dispersion.

Besonders gute Ergebnisse erzielt man, wenn man zusätzlich zu den Schutzkolloiden kolloidale Kieselsäure in Konzentration von in der Regel 0,2 bis 5 Gew.-%, bezogen auf die Menge der Dispersion, mitverwendet. Näheres zu dieser Methode, die besonders gut mit einem wasserlöslichen Polymeren aus Adipinsäure und Diethanolamin als Schutzkolloid gelingt, ist der USA 3 615 972 zu entnehmen.

Um bei der Mikrosuspensionspolymerisation den gleichzeitig ablaufenden Emulsionspolymerisations-Prozeß, bei dem sich wesentlich kleinere und daher zur Mattierung ungeeignete Teilchen bilden, zurückzudrängen, verwendet man zweckmäßigerweise einen wasserlöslichen Inhibitor mit, der die Emulsionspolymerisation unterdrückt. Wirksame Verbindungen dieser Art sind z.B. Chrom(+6)-Verbindungen wie Kaliumdichromat.

Vorzugsweise führt man die Mikrosuspensionspolymerisation bei einem pH-Wert von 3 bis 9 aus.

Als Polymerisationsinitiatoren können die dem Fachmann bekannten öl- bzw. monomerlöslichen Radikalbildner, insbesondere Peroxide und Azoverbindungen verwendet werden, wie sie für die Herstellung der Komponente B genannt wurden. Ihre Menge, bezogen auf die Gesamtmenge der Monomeren (c₁) bis (c₅), beträgt in der Regel 0,1 bis 3 Gew.-%.

Die Polymerisation der Monomeren findet bei einer Temperatur von 20 bis 150°C, bevorzugt 40 bis 130°C statt. Die unteren Grenzwerte dieser Bereiche entsprechen in der Regel der Zerfallstemperatur des verwendeten Initiators. Die Menge des Wassers beträgt vorzugsweise 40 bis 70 Gew.-% der Gesamtmenge der Dispersion.

Die bei der Vermischung der harten Matrix-Copolymeren (Komponente (A)) und der elastomeren feinstteiligen Pfropfpolymerisate (Komponente (B)) entstehenden schlagzäh modifizierten thermoplastischen Formmassen ABS bzw. ASA können mit den Teilchen größeren Durchmessers (Komponente (C)) unter Erhalt der mechanischen Eigenschaften mattiert werden. Insbesondere ist die Schlagzähigkeit der erfindungsgemäßen Formmassen derjenigen der üblichen, glänzende Oberflächen aufweisenden Polymere ebenbürtig. Die bei Mitverwendung herkömmlicher Mattierungsmittel wie Kreide oder Kieselgel zu beobachtende Verschlechterung der mechanischen Eigenschaften tritt nicht ein.

Darüber hinaus besitzen die erfindungsgemäßen Formmassen und die daraus hergestellten Formteile die Vorteile einer verbesserten Bedruckbarkeit und sog. anti-blocking-Eigenschaften, d.h. die von den Partikeln "angerauhten" Oberflächen der Formteile haften nicht aneinander. Dieser auf Adhäsion zurückzuführende Effekt ist beispielsweise von Kunststoffolien bekannt. Erfindungsgemäße Partikel enthaltende, zu einem Stapel aufeinander geschichtete Folien lassen sich problemlos voneinander trennen, im Gegensatz zu Folien, die solche Partikel nicht enthalten.

Die Formmassen können außerdem Zusatzstoffe aller Art enthalten. Genannt seien z.B. Gleit- und Entformungsmittel, Pigmente, Flammschutzmittel, Farbstoffe, Stabilisatoren, fasern- und pulverförmige Füll- und Verstärkungsmittel und Antistatika, die jeweils in den üblichen Mengen zugesetzt werden.

Die Herstellung der erfindungsgemäßen Formmassen kann nach an sich bekannten Mischverfahren z.B. durch Einarbeiten des partikelförmigen Pfropfpolymerisates in das Basismaterial bei Temperaturen oberhalb des Schmelzpunktes des Basismaterials, insbesondere bei Temperaturen von 180 bis 300°C in üblichen Mischvorrichtungen (Knetern, Extrudern, Mischern) erfolgen. Aus den erfindungsgemäßen Formmassen lassen sich Formkörper mit reduziertem Oberflächenglanz (Mattigkeit) und hoher Schlagzähigkeit herstellen.

### Beispiele

Bei der Angabe der mittleren Teilchengröße d handelt es sich um das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972) Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben.

Der d₁₀-Wert gibt denjenigen Teilchendurchmesser an, bei dem 10 Gew.-% aller Teilchen einen kleineren und 90 Gew.-% einen größeren Durchmesser haben. Umgekehrt gilt für den d₉₀-Wert, daß 90 Gew.-% aller Teilchen einen kleineren und 10 Gew.-% einen größeren Durchmesser haben als derjenige Durchmesser, der dem d₉₀-Wert entspricht. d₁₀-, d₅₀- und d₉₀-Wert charakterisieren die Breite der Teilchengrößenverteilung. Der volumenmittlere Teilchendurchmesser D gibt denjenigen Teilchendurchmesser an, bei dem 50 Volumen-% aller Teilchen einen größeren und 50 Volumen-% einen kleineren Teilchendurchmesser aufweisen.

Für die nachstehenden Beispiele wurden die folgenden Bestandteile hergestellt bzw. bereitgehalten (Prozentangaben sind Gew.-%):
A: hartes, thermoplastisches SAN-Copolymerisat (Matrix) Es wurde ein Copolymerisat aus 65 Gew.-% Styrol und 35 Gew.-% Acrylnitril nach dem Verfahren der kontinuierlichen Lösungspolymerisation hergestellt, wie es im Kunststoff-Handbuch, Hrg. R. Vieweg und G. Danmiller, Bd. V "Polystyrol", Carl-Hanser-Verlag München 1969, Seite 122 bis 124, beschrieben ist. Die Viskositätszahl VZ (ermittelt nach DIN 53 726 bei 25°C, 0,5 Gew.-% in Dimethylformamid) betrug 80 ml/g.
B: kautschukelastisches Pfropfpolymerisat
B-1: herkömmliches Pfropfpolymerisat (Polybutadien-Kautschuk), Typ Butadien (Kern)/Styrol + Acrylnitril (Schale).
   Durch Polymerisation von 600 g Butadien bis zu einem Umsatz von 98 % in Gegenwart einer Lösung von 6 g Tert.-Dodedecylmercaptan, 7 g C₁₄-Na-Alkylsulfonat als Emulgator, 2 g Kaliumperoxidsulfat und 2 g Natriumpyrosulfat in 800 g Wasser bei 65°C wurde ein Polybutadienlatex hergestellt. Die mittlere Teilchengröße war 100 nm.
   Der Latex wurde durch Zusatz von 250 g einer Emulsion eines Copolymeren aus 96 Gew.-% Ethylacrylat und 4 Gew.-% Methacrylsäureamid mit einem Feststoffgehalt von 10 % agglomeriert, wobei sich eine mittlere Teilchengröße von 350 nm einstellte.
   Nach Zusatz von 400 g Wasser, 4 g Na-C₁₄-Alkylsulfonat, und 2 g Kaliumperoxodisulfat wurden 400 g einer Mischung aus 70 Gew.-% Styrol und 30 Gew.-% Acrylnitril innerhalb von 4 Stunden zugesetzt und der Ansatz unter Rühren auf 75°C gehalten. Der Umsatz, bezogen auf Styrol/Acrylnitril war nahezu quantitativ. Die erhaltene Pfropfkautschukdispersion wurde mittels wäßriger Magnesiumsulfatlösung gefällt und entwässert.
B-2: modifiziertes Pfropfpolymerisat (Polybutylacrylatkautschuk), Kern sauer, Schale basisch modifiziert. Typ n-Butylacrylat (Kern), modifiziert mit Methacrylsäure als saure Gruppen enthaltendes Monomeres/Styrol + Acrylnitril (Schale), modifiziert mit N,N-Dimethylaminoethylacrylat als basische Gruppen enthaltendes Monomeres.
   160 g einer Mischung I, bestehend aus 96 Gew.-% n-Butylacrylat, 2 Gew.-% Dihydrodicyclopentadienylacrylat und 2 % Methacrylsäure wurden in 150 g Wasser unter Zusatz von 5 g des Natriumsalzes einer C₁₂- bis C₁₈-Paraffinsulfonsäure, 3 g Kaliumperoxodisulfat, 3 g Natriumhydrogencarbonat und 1,5 g Natriumpyrophosphat unter Rühren auf 60°C erwärmt. 10 Minuten nach dem Anspringen der Polymerisationsreaktion wurden innerhalb von 3 Stunden weitere 840 g der Mischung I zugegeben, wonach noch eine weitere Stunde bei 60°C gehalten wurde. Der Umsatz betrug 99 % und die mittlere Teilchengröße war 0,1 µm.
   2100 g dieser Emulsion wurden mit 1150 g Wasser und 2,7 g Kaliumperoxodisulfat gemischt und unter Rühren auf 65°C erwärmt. Danach wurden im Lauf von 3 Stunden 560 g eines Monomerengemisches aus 73 Gew.-% Styrol, 23 Gew.-% Acrylnitril und 4 Gew.-% N,N-Dimethylaminoethylacrylat zudosiert, wonach die Emulsion noch 2 Stunden bei 65°C gehalten wurde. Das Pfropfpolymerisat wurde mittels Calciumchloridlösung bei 95°C aus der Emulsion gefällt, mit Wasser gewaschen und im warmen Luftstrom getrocknet. Der Umsatz betrug 99,7 %.
C: hartes Copolymerisat großen Durchmessers
C-1: SAN-Copolymerisat-Partikel, vernetzt
   Es wurden
   - 1120 g: Wasser,
   - 200 g: einer wäßrigen alkalischen kolloidalen Kieselsäuredispersion (30 % SiO₂, pH 9,8, Partikeldurchmesser 12 nm; "Ludox® HS 30" der Fa. DuPont) als Schutzkolloid
   - 30 g: einer 10%igen wäßrigen Lösung eines Copolymeren aus 50 % Adipinsäure und 50 % Diethanolamin als wasserlöslichem Polymeren, und
   - 12 g: einer 2,5%igen wäßrigen Kaliumdichromatlösung als weiteres Hilfsreagenz
   unter Stickstoff zusammengegeben und mit 10%iger wäßriger Salzsäure ein pH-Wert von 6,0 eingestellt. Es wurde eine Mischung aus 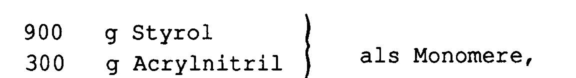
   - 1,2 g: des Diesters von Ethylenglycol mit Methacrylsäure (Ethylenglycoldimethacrylat) als Vernetzer,
   - 6 g: Benzoylperoxid als Initiator
   zugefügt. Anschließend wurde mit einem Hochleistungsrührer (Dissolver-Rührer, 4500 Upm, 5 cm-Zahnscheibe) 25 min lang dispergiert und währenddessen der pH-Wert mit der genannten HCl auf 4,0 abgesenkt. Hierbei bildeten sich Monomerentröpfchen des mittleren Durchmessers von 2 bis 7 µm, wie durch Lichtmikroskopie bestimmt wurde. Die Dispersion wurde in einen anderen Kessel überführt und dort unter mäßigem Rühren innerhalb 5 Stunden auf 85°C aufgeheizt, wobei sich das Styrol-Acrylnitril-Copolymerisat bildete. Der Umsatz betrug etwa 98 %.
   Die erhaltenen Copolymerisat-Partikel hatten einen mittleren Teilchendurchmesser d₁₀ von 0,31 µm, d₅₀ von 1,72 µm und d₉₀ von 5,98 µm. Der volumenmittlere Durchmesser D betrug 2,67 µm, bestimmt mit einem Malvern-Master-Sizer-Gerät.
C-2: MMA-Polymerisat-Partikel großen Durchmessers. Typ Methylmethacrylat + Methacrylsäure, vernetzt mit Butandioldimethacrylat.
   Eine Mischung aus
   - 1300 g: Wasser
   - 12 g: einer Lösung eines Copolymeren aus 65 Gew.-% Methacrylsäure und 35 % Gew.-% Methylmethacrylat, Gehalt 1,6 Gew.-%, neutralisiert mit NaOH auf pH 7,
   - 400 g: einer teilverseiften Polyvinylacetat-Lösung, Gehalt 10 Gew.-% (Mowiol® 40-88 von Hoechst AG), als Emulgator,
   - 873 g: Methylmethacrylat
   - 8 g: Methylacrylat
   - 27 g: Butandioldimethacrylat als Vernetzer,
   - 0,15 g: tert.-Butylperpivalat
   - 0,58 g: Dilauroylperoxid
   - 0,29 g: t.-Butylperoxyneodecanoat
   - 4,5 g: tert.-Dodecylmercaptan als Regler,
   wurde 30 min. lang einer Feinstdispergierung unterworfen (Dispenser-Rührer mit 5 cm-Zahnscheibe, 3500 Upm) und anschließend auf 67°C erwärmt. Man hielt nach Überführen der Dispersion in einen anderen Kessel unter mäßigem Rühren (Ankerrührer, 150 Upm) 2,5 Stunden auf dieser Temperatur, dann eine Stunde auf 75°C sowie eine Stunde auf 85°C, wonach die erhaltene Dispersion durch Gefrierkoagulation ausgefällt, entwässert und getrocknet wurde.
   Die Dispersion hatte einen Feststoffgehalt von 34 %. Die Teilchengröße, bestimmt mit einem Malvern Master Sizer-Gerät, lag im Bereich von 1 bis 18 µm, wobei der überwiegende Anteil der Teilchen einen Durchmesser von 2 bis 6 µm hatte.

Die Komponenten (A), (B) und (C) wurden entsprechend den in Tabelle 1 angegebenen Mengenverhältnissen in einem üblichen Extruder (ZSK 30, Fa. Werner und Pfleiderer) bei 250°C innig vermischt, extrudiert und granuliert. Das Granulat wurde bei 250°C Schmelzetemperatur und 60°C Formtemperatur zu Norm-Kleinstäben (siehe DIN 53453) gespritzt. Weiterhin wurden bei Formtemperaturen von 30°C und 60°C Rundscheiben von 7 cm Durchmesser und 0,2 cm Dicke gespritzt. Die Formkörper wurden auf ihre Eigenschaften untersucht.

Die Tabelle faßt die Mischungsverhältnisse in den Polymermischungen sowie die Eigenschaften der daraus hergestellten Formkörper zusammen.

| Versuch Nr. | 1V | 1 | 2V | 2 | 3V | 3 |
|---|---|---|---|---|---|---|
| Zusammensetzung der Mischungen [%]: | | | | | | |
| A = Matrix SAN | 78 | 68 | 70 | 65 | 73 | 65 |
| B-1 = Bu-g-SAN | 22 | 22 | 20 | 20 | 22 | 20 |
| B-2 = BA(s)-g-SAN(b) | 0 | 0 | 10 | 10 | 0 | 10 |
| C-1 = SAN-Partikel | 0 | 10 | 0 | 5 | 0 | 0 |
| C-2 = MMA-Partikel | 0 | 0 | 0 | 0 | 5 | 5 |

| Eigenschaften | | | | | | |
|---|---|---|---|---|---|---|
| Kerbschlagzähigkeit [Nm] | 11 | 12 | 15 | 15 | 6 | 9 |
| multiaxiale Zähigkeit [Nm] | 12 | 11 | 15 | 22 | 3 | 6 |
| Lichtreflexion [%] bei | | | | | | |
| Formtemperatur 30°C | 68 | 14 | 17 | 12 | 33 | 18 |
| Formtemperatur 60°C | n.b. | 22 | 24 | 19 | n.b. | n.b. |
| SAN: Styrol-Acrylnitril-Copolymer Bu: Polybutadien BA: Poly-n-butylacrylat MMA: Polymethylmethacrylat, vernetzt g : Propfung (s) : mit sauren Gruppen modifiziert (b) : mit basischen Gruppen modifiziert n.b.: nicht bestimmt | | | | | | |

Die Lichtreflexion eines Formteils aus Styrol-Acrylnitril-Copolymer, (Komponente A) das mit SAN-gepfropftem Polybutadien (B-1)schlagzäh modifiziert ist, wird durch Mitverwendung der erfindungsgemäßen SAN-Partikel großen Durchmessers (C-1) erheblich reduziert (Versuch Nr. 1V und 1).

Setzt man anstelle der erfindungsgemäßen SAH-Teilchen (C-1) Pfropfpolymerisate üblichen Durchmessers ein, die aus einem mit sauren Gruppen modifizierten Polybutylacrylat, gepfropft mit einer mit basischen Gruppen modifizierten Hülle (B-2) bestehen, so wird ebenfalls ein deutlicher Mattierungseffekt erzielt - wie aus der EP-A 576 960 bekannt (Versuch 2V). Wird dagegen eine Kombination beider Mattierungsmittel mitverwendet - sauer/basisch modifizierte, SAN-gepfropfte Polybutylacrylatteilchen üblicher Größe (B-2) zusammen mit erfindungsgemäßen SAN-Teilchen großen Durchmessers (C-1) -, so ist eine nochmalige Verminderung der Lichtreflexion festzustellen (Versuch 2).

Werden dem mit Polybutadien (B-1) schlagzäh modifizierten SAN-Copolymer (A) Partikel großen Durchmessers aus vernetztem Polymethylmethacrylat (C-2), zugefügt, erhält man gleichfalls matte Formteiloberflächen, wie aus EP-A 582 951 bekannt ist (Versuch 3V). Bei Mitverwendung einer Kombination dieser großteiligen PMMA-Partikel (C-2) zusammen mit den sauer/basisch modifizierten, SAN-gepfropften Polybutylacrylat-Teilchen normaler Größe (B-2), beobachtet man eine nochmals erheblich verminderte Lichtreflexion (Versuch 3).

Ein Vergleich der erfindungsgemäßen Beispiele 1, 2 und 3 mit ihren jeweils korrespondierenden Vergleichsversuchen 1V, 2V und 3V läßt erkennen, daß der gewünschte Mattierungseffekt unter vollständigem Erhalt der mechanischen Eigenschaften (Kerbschlagzähigkeit und multiaxiale Zähigkeit) erzielt wird.

## Patentansprüche

1. Thermoplastische Formmassen aus
A) 35 bis 99,5 Gew.-% eines Matrix-Copolymerisates (A) aus
a₁) 50 bis 95 Gew.-% Styrol und/oder α-Methylstyrol,
a₂) 5 bis 50 Gew.-% Acrylnitril, und
a₃) 0 bis 20 Gew.-% weiteren Comonomeren
B) 0 bis 50 Gew.-% eines in (A) unlöslichen partikelförmigen Pfropfcopolymerisates (B) mit einem mittleren Teilchendurchmesser d₅₀ von 0,03 bis 1 µm aus
b₁) 30 bis 80 Gew.-% eines Kerns aus einem kautschukelastischen Polymeren mit einer Glasübergangstemperatur unter -10°C, und
b₂) 20 bis 70 Gew.-% einer Pfropfhülle aus einem Polymeren, das mit (A) verträglich oder teilverträglich ist,
und
C) 0,5 bis 30 Gew.-% eines in (A) unlöslichen partikelförmigen vernetzten Copolymerisates (C) mit einem mittleren Teilchendurchmesser d₅₀ von 0,5 bis 50 µm aus
c₁) 50 bis 89,95 Gew.-% Styrol und/oder α-Methylstyrol,
c₂) 10 bis 50 Gew.-% Acrylnitril,
c₃) 0,05 bis 5 Gew.-% eines polyfunktionellen, vernetzenden Monomeren,
c₄) 0 bis 10 Gew.-% eines Monomeren, das saure oder basische Gruppen enthält, und
c₅) 0 bis 20 Gew.-% weiteren Comonomeren.

2. Thermoplastische Formmassen nach Anspruch 1, in denen
- 0,5 bis 10 Gew.-% des Kernpolymerisates (b₁) des Pfropfpolymeren (B) aus Monomeren aufgebaut ist, die saure oder basische Gruppen enthalten, und
- 0,5 bis 10 Gew.-% der Pfropfhülle (b₂) aus Monomeren mit basischen Gruppen aufgebaut ist, falls in (b₁) saure Gruppen enthalten sind, oder aus Monomeren mit sauren Gruppen aufgebaut ist, falls in (b₁) basische Gruppen enthalten sind.

3. Thermoplastische Formmassen nach Anspruch 1, in denen 2 bis 30 Gew.-% der Komponente (B) aus dem Pfropfcopolymerisat gemäß Anspruch 2 und der Rest aus einem Pfropfcopolymerisat besteht, das keine sauren bzw. basischen Gruppen enthält.

4. Thermoplastische Formmassen nach Anspruch 1, die eine Komponente (B) gemäß Anspruch 2 und ein Copolymerisat (C) enthalten, das aus 0,1 bis 10 Gew.-% Monomeren mit sauren oder basischen Gruppen als Comonomeren (c₄) aufgebaut ist.

5. Thermoplastische Formmassen nach Anspruch 1 oder 3, in denen das Copolymerisat (C) aus den Monomeren (c₁) bis (c₅) aufgebaut ist, wobei die Monomeren (c₁) und (c₂) durch Methylmethacrylat ersetzt sein können und das Monomere (c₅) ein C₁- bis C₁₀-Alkylacrylat sein kann.

6. Partikelförmige vernetzte Copolymerisate (C) mit einem mittleren Teilchendurchmesser von 0,5 bis 50 µm aus
c₁) 50 bis 89,95 Gew.-% Styrol und/oder α-Methylstyrol
c₂) 10 bis 50 Gew.-% Acrylnitril
c₃) 0,05 bis 5 Gew.-% eines polyfunktionellen, vernetzenden Monomeren
c₄) 0 bis 10 Gew.-% eines Monomeren, das saure, basische oder polare Gruppen enthält, und
c₅) 0 bis 20 Gew.-% weiterer Comonomerer.

7. Partikelförmige Copolymerisate (C) nach Anspruch 6, enthaltend 0,1 bis 10 Gew.-% des Comonomeren (c₄).

8. Partikelförmige Copolymerisate (C) nach Anspruch 6, enthaltend Methylmethacrylat anstelle der Monomeren (C₁) und (C₂) und als Monomer (C₅) C₁-bis C₁₀-Alkylacrylate.

9. Verfahren zur Herstellung der partikelförmigen Copolymerisate (C) gemäß Anspruch 6 oder 7, dadurch gekennzeichnet, daß man
- aus den Monomeren c₁) bis c₅) in Gegenwart eines Schutzkolloides unter intensiver Scherung mittels Rührorganen, die Umfangsgeschwindigkeiten von 10 bis 25 m/s haben eine wäßrige Feinstdispersion herstellt, in der die Monomertröpfchen einen mittleren Durchmesser von 0,05 bis 50 µm haben, und
- das Monomerengemisch anschließend unter mäßigem Rühren mittels Rührorganen, die Umfangsgeschwindigkeiten von weniger als 3 m/s haben, der Polymerisation mittels eines radikalischen Polymerisationsinitiators unterwirft.

10. Partikelförmige Copolymerisate (C), erhältlich nach dem Verfahren gemäß Anspruch 9.

11. Verwendung der partikelförmigen Copolymerisate gemäß den Ansprüchen 6 bis 10 als Mattierungsmittel für thermoplastische Kunststoffe.

12. Verwendung der thermoplastischen Formmassen gemäß Anspruch 1 bis 5 zur Herstellung von Formkörpern.

13. Formkörper aus den thermoplastischen Formmassen gemäß Anspruch 1 bis 5.
